# EUROPÄISCHE PATENTSCHRIFT

(11) **EP 4 034 917 B1**
(45) Veröffentlichungstag und Bekanntmachung des Hinweises auf die Patenterteilung: **20.03.2024**
(21) Anmeldenummer: 20775280.9
(22) Anmeldetag: 18.09.2020
(51) Int. Cl.: G01T 1/169

(54) **VERFAHREN ZUM MESSEN EINER RADIOLOGISCHEN KONTAMINATION EINES WERKSTÜCKES**
METHOD FOR MEASURING A RADIOLOGICAL CONTAMINATION OF A WORKPIECE
PROCÉDÉ DE MESURE DE CONTAMINATION RADIOLOGIQUE D'UNE PIÈCE

(30) Priorität: 26.09.2019 DE 102019125975
(43) Veröffentlichungstag der Anmeldung: 03.08.2022
(73) Patentinhaber: RWE Nuclear GmbH, 45141 Essen (DE)
(72) Erfinder: RECKNAGEL, Jörg, 45141 Essen (DE); STEINBACHER, Klaus, 45141 Essen (DE)
(74) Vertreter: Keenway Patentanwälte Neumann Heine Taruttis
(86) Internationale Anmeldenummer: PCT/EP2020/076121
(87) Internationale Veröffentlichungsnummer: WO 2021/058394

(56) Entgegenhaltungen:
- JP-A- H09 127 247
- JP-A- 2017 211 347
- US-A- 5 444 746
- SIMON NOTHEIS ET AL: "Towards an autonomous manipulator system for decontamination and release measurement", MECHATRONICS AND EMBEDDED SYSTEMS AND APPLICATIONS (MESA), 2012 IEEE/ASME INTERNATIONAL CONFERENCE ON, IEEE, 8. Juli 2012 (2012-07-08), Seiten 263-268, XP032222891, DOI: 10.1109/MESA.2012.6275572 ISBN: 978-1-4673-2347-5

## Beschreibung

Gegenstand der vorliegenden Erfindung ist ein Verfahren zum Messen einer radiologischen Kontamination eines Werkstückes, die insbesondere beim Rückbau von kerntechnischen Anlagen eingesetzt werden können.

Beim Betrieb und beim Rückbau von kerntechnischen Anlagen wie insbesondere Kernkraftwerken müssen regelmäßig Werkstücke aus dem Kontrollbereich der kerntechnischen Anlage in den diesen umschließenden Überwachungsbereich verbracht werden. Beispielsweise erfordert der Rückbau von kerntechnischen Anlagen die Dekontamination von radiologisch kontaminierten Werkstücken, bevor diese aus dem Kontrollbereich in den Überwachungsbereich entlassen werden können, beispielsweise zur weiteren Verwertung oder Entsorgung. Vor Entfernung aus dem Kontrollbereich und dem Überwachungsbereich ist sicherzustellen, dass die radiologische Kontamination der Werkstücke einzuhaltende Grenzwerte unterschreitet. Je nach Jurisdiktion sind hier gesetzliche Vorschriften im Hinblick auf eine so genannte Freimessung, die die Einhaltung der genannten Grenzwerte ergibt, einzuhalten. Da diese Freimessungen üblicherweise aufwändig sind, wird regelmäßig durch eine Vormessung sichergestellt, dass nur Werkstücke einer Freimessung unterzogen werden, die die genannten Grenzwerte einhalten. Auch diese Vormessungen sind aufwändig durchzuführen.

Verfahren und Vorrichtungen zur Untersuchung der radioaktiven Kontamination von Oberflächen potentiell strahlungsbelasteter Gegenstände sind aus der JP 2017-211347 A sowie der JP 09-127247 bekannt.

Hiervon ausgehend liegt der vorliegenden Erfindung die Aufgabe zugrunde, die aus dem Stand der Technik bekannten Nachteile zumindest teilweise zu überwinden.

Diese Aufgabe wird gelöst mit den Merkmalen des unabhängigen Anspruchs 1. Weitere vorteilhafte Ausgestaltungen der Erfindung sind in den abhängig formulierten Ansprüchen angegeben. Die in den abhängig formulierten Ansprüchen einzeln aufgeführten Merkmale sind in technologisch sinnvoller Weise miteinander kombinierbar und können weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Das erfindungsgemäße Verfahren zum Messen einer radiologischen Kontamination einer Oberfläche eines Werkstücks umfasst:
a) Festlegen einer Bewegungsbahn umfassend dreidimensionale Ortskoordinaten und eine dreidimensionale Geschwindigkeitskoordinate basierend zumindest auf einem Erfassungsbereich und einer Erfassungsgenauigkeit eines Kontaminationserfassungsgerätes und einem dreidimensionalen Oberflächendatensatz des Werkstücks; und
b) automatisierte Bewegung des Kontaminationserfassungsgerätes entsprechend der Bewegungsbahn bei gleichzeitiger ortsaufgelöster Erfassung der Kontaminationsdaten der Oberfläche, wobei das Verfahren zur Vormessung vor einer Freimessung des Werkstücks durchgeführt wird.

Unter dem Begriff der radiologischen Kontamination wird die Verunreinigung des Werkstücks mit radioaktiven Stoffen verstanden. Unter dem Begriff des Messens einer radiologischen Kontamination eines Werkstücks wird eine Messung verstanden, mit der das Maß einer radiologischen Kontamination des Werkstücks erfasst wird. Insbesondere umfasst die Messung der radiologischen Kontamination die Messung von Alpha-, Beta- und/oder Gammastrahlung (im Folgenden Strahlung), die von der Oberfläche des Werkstücks emittiert wird. Zur Durchführung der Messung wird ein Kontaminationserfassungsgerät in Schritt b) automatisiert über die Oberfläche des Werkstücks geführt, um ortsaufgelöst die von einem bestimmten Oberflächenteilstück emittierte Strahlung zu bestimmen. Hierdurch ergeben sich Kontaminationsdaten, die ortsaufgelöst die Kontaminationssituation auf der Oberfläche des Werkstücks angeben.

Hierbei wird erfindungsgemäß das Kontaminationserfassungsgerät entsprechend einer Bewegungsbahn über die Oberfläche des Werkstücks geführt, so dass die gesamte Oberfläche des Werkstücks erfasst wird. Die Bewegungsbahn umfasst dabei einerseits Ortskoordinaten, also Koordinaten, die einen Ort kennzeichnen, beispielsweise entsprechende Polarkoordinaten als Teil beispielsweise eines Basis-, Tool- oder Werkstück-Koordinatensystems eines ersten Manipulators, an dem das Kontaminationserfassungsgerät fixiert ist, und eine dreidimensionale Geschwindigkeitskoordinate, die zeitaufgelöst die Richtung und die Bewegungsgeschwindigkeit des Kontaminationserfassungsgeräts angibt. Zusätzlich ist es bevorzugt, wenn die Bewegungsbahn auch ortsaufgelöst eine Ausrichtung des Kontaminationserfassungsgerätes umfasst, so dass beispielsweise die Ausrichtung des Kontaminationserfassungsgeräts wie beispielsweise eines Proportionalzählrohres auf das zu messende Oberflächenelement des Werkstücks ausgerichtet ist um eine effiziente und präzise Messung der Kontamination im Oberflächenelement zu ermöglichen. Hierdurch ist der Weg des Kontaminationserfassungsgerätes relativ zum Werkstück im Hinblick auf den Ort, die Zeit und die Geschwindigkeit und gegebenenfalls die Ausrichtung definiert.

Die Bewegungsbahn wird dabei in Schritt a) basierend zumindest auf einem Erfassungsbereich und einer Erfassungsgenauigkeit eines Kontaminationserfassungsgerätes und einem dreidimensionalen Oberflächendatensatz des Werkstücks festgelegt. Unter einem dreidimensionalen Oberflächendatensatz wird ein Datensatz verstanden, der den Oberflächenverlauf des Werkstücks dreidimensional abbildet. Hierzu ist bevorzugt die Oberfläche des Werkstücks in Pixel einer vorgebbaren Auflösung beziehungsweise Größe aufteilbar, wobei der Oberflächendatensatz die Koordinaten der entsprechenden Pixel darstellt. Unter dem Begriff Manipulator wird hier insbesondere ein so genannter Roboter oder Roboterarm verstanden.

Durch die Festlegung der Bewegungsbahn basierend auf dem Oberflächendatensatz wird erreicht, dass die vollständige Oberfläche des Werkstücks radiologisch gemessen wird. Durch die Festlegung der Bewegungsbahn basierend auf den Charakteristika des Kontaminationserfassungsgerätes, zumindest des Erfassungsbereich und einer Erfassungsgenauigkeit eines Kontaminationserfassungsgerätes, kann die lokale Erfassungsgenauigkeit definiert werden. Jedes Kontaminationserfassungsgerät hat, insbesondere in Abhängigkeit von dem zugrundeliegenden Messprinzip, beispielsweise dem Prinzip des Proportionalzählers, dem Prinzip des Geiger-Müller-Zählrohres oder dem Szintillationsprinzip, und der Struktur und Größe der sensitiven Fläche oder Öffnung, bestimmte Charakteristika, die beispielsweise den Abstand der sensitiven Fläche oder Öffnung zur zu vermessenden Oberfläche, die notwendige Bewegungsgeschwindigkeit etc. betreffen, oft auch abhängig von der notwendigen Messgenauigkeit, die bei der Festlegung der Bewegungsbahn in Schritt b) berücksichtigt werden, um eine genügend große Messgenauigkeit und/oder lokale Auflösung zu erhalten. Zusätzlich kann die Bewegungsbahn so festgelegt werden, dass bei einer vorgegebenen Genauigkeit und/oder lokalen Auflösung eine möglichst schnelle Erfassung der Kontaminationsdaten erfolgt. Je nach Anwendungsfall kann das Werkstück auch gegenüber dem Kontaminationserfassungsgerät bewegt werden.

So ist es nach der vorliegenden Erfindung möglich, einfach und effizient automatisiert die Kontaminationsdaten des Werkstücks im Rahmen einer Vormessung vor einer Freimessung ortsaufgelöst zu erhalten. Unter ortsaufgelöst wird hier verstanden, dass die einzelne Kontaminationsdaten bestimmten Punkten oder Flächenelementen auf der Oberfläche des Werkstücks zugeordnet werden können.

Die Kontaminationsdaten werden bevorzugt ortsaufgelöst gespeichert und können für nachfolgende Tätigkeiten genutzt werden, insbesondere wenn eine (weitere) Dekontamination zumindest in Teilbereichen der Oberfläche erfolgen muss. Bevorzugt kann so anhand der Kontaminationsdaten die Dekontamination auf bestimmte Bereiche des Werkstücks beschränkt werden. Alternativ oder zusätzlich können die Kontaminationsdaten zu Dokumentationszwecken gespeichert werden, um beispielsweise zu einem späteren Zeitpunkt den Kontaminationszustand der Oberfläche des Werkstücks dokumentieren zu können.

Bevorzugt wird vor Schritt a) die Oberfläche des Werkstücks zur Erstellung eines dreidimensionalen Oberflächendatensatzes dreidimensional erfasst.

Dies kann insbesondere durch ein dreidimensionales Scan-Verfahren erfolgen. Bevorzugt beruht dies auf der Bestrahlung der Oberfläche des Werkstücks mit einer Strahlung, insbesondere sichtbares Licht, bevorzugt durch mindestens einen Laser erzeugtes Licht, und der Erfassung der von der Oberfläche des Werkstücks reflektierten Strahlung mit mindestens einem Sensor. Bei der Erfassung der reflektierten Strahlung wird insbesondere der Abstand von der Stelle, an der die Strahlung reflektiert wurde und der Erfassung, also insbesondere einem aufnehmenden Sensor, erfasst. Bevorzugt ist eine dreidimensionale Erfassung nach dem Triangulationsprinzip. Bevorzugt erfolgt die Messung autonom, in dem die Strahlungsquelle und/oder der Sensor automatisch relativ zum Werkstück bewegt werden.

Bevorzugt erfolgt die dreidimensionale Erfassung der Oberfläche durch einen Laserscanner, insbesondere einem auf einer Triangulation beruhenden 3D Messverfahren. Hierbei wird mindestens ein Laser als Strahlungsquelle eingesetzt und mindestens ein lichtempfindlicher Sensor wie beispielsweise ein CCD Sensor eingesetzt.

Bevorzugt wird das Werkstück während der Erfassung zumindest zeitweise bewegt. Dies erlaubt die Erfassung der vollständigen Oberfläche des Werkstücks. Beispielsweise kann das Werkstück während des Erfassens definiert gedreht werden, so dass beispielsweise eine Vor- und eine Rückseite erfassbar sind.

Bevorzugt wird das Werkstück während Schritt b) zumindest zeitweise bewegt. Insbesondere wird das Werkstück zumindest einmal gedreht, so dass in Schritt b) die vollständige Oberfläche des Werkstücks zugänglich ist. Die Bewegung des Werkstücks wird dabei bei der Erstellung der Bewegungsbahn berücksichtigt.

Bevorzugt werden die Kontaminationsdaten durch ein Kontaminationserfassungsgerät basierend auf mindestens einem der folgenden Messwertnehmer erfasst:
- einem Szintillator; und
- einem Zählrohr.

Unter einem Szintillator wird ein Messwertnehmer verstanden, der ionisierende Strahlung basierend auf dem Szintillationseffekt erfasst. Unter einem Zählrohr wird insbesondere eine Ionisationskammer, ein Proportionalzählrohr oder ein Geiger-Müller-Zählrohr verstanden. Ein Zählrohr weist mithin eine Kathode und eine Anode auf, zwischen denen eine elektrische Spannung angelegt wird.

Weiterhin wird eine Vorrichtung zum Messen einer radiologischen Kontamination einer Oberfläche eines Werkstücks vorgeschlagen. Die Vorrichtung als solche fällt nicht unter den Schutzumfang der Ansprüche. Die Vorrichtung umfasst mindestens einen ersten Manipulator mit einem Kontaminationserfassungsgerätes und eine Steuereinheit geeignet und bestimmt zur Durchführung des erfindungsgemäßen Verfahrens, mit der der erste Manipulator entsprechend der Bewegungsbahn ansteuerbar ist.

Der erste Manipulator weist insbesondere drei translatorische und mindestens einen rotatorischen Freiheitsgrad auf. Der erste Manipulator wird insbesondere durch entsprechende Motoren angetrieben, die von der Steuereinheit ansteuerbar sind. Unter einer Bewegung entsprechend der Bewegungsbahn wird verstanden, dass der Manipulator so bewegt wird, dass das Kontaminationserfassungsgerät auf der Bewegungsbahn bewegt wird.

Bevorzugt ist mindestens ein Erfassungsgerät zur Erfassung des dreidimensionalen Oberflächendatensatzes ausgebildet. Das Erfassungsgerät wendet bevorzugt ein dreidimensionales Scan-Verfahren an.

Bevorzugt umfasst das Erfassungsgerät einen Laserscanner, der einen Laser und einen Detektor zur Erfassung einer durch den Laser emittierten Strahlung umfasst. Hierbei wird bevorzugt der Laser so ausgerichtet, dass die emittierte Strahlung von der Oberfläche reflektiert und vom Detektor erfasst wird, so dass beispielsweise durch Triangulation ein Abstand des Reflektionspunktes, an dem die Strahlung auf die Oberfläche des Werkstücks auftrifft und von diesem Reflektiert wird, zu dem Detektor oder zu einem Referenzpunkt oder einer Referenzebene bestimmt werden kann. Der Laser kann dabei als Punktlaser oder als Linienlaser ausgeführt sein, der Detektor bevorzugt als CCD oder CMOS Kamera.

Bevorzugt umfasst das Kontaminationserfassungsgerät mindestens einen der folgenden Messwertnehmer:
- einen Szintillator; und
- ein Zählrohr.

Bevorzugt umfasst die Vorrichtung mindestens einen zweiten Manipulator zur zumindest zeitweisen Bewegung des Werkstücks. Insbesondere ist der zweite Manipulator geeignet und bestimmt das Werkstück zu drehen. Bevorzugt wird der zweite Manipulator von der Steuereinheit gesteuert.

Weiterhin wird ein Computerprogrammprodukt vorgeschlagen. Das Computerprogrammprodukt als solches fällt nicht unter den Schutzumfang der Ansprüche. Das Computerprogrammprodukt umfasst Befehle, die bei der Ausführung des Programms durch einen Computer diesen veranlassen, das erfindungsgemäße Verfahren im Zusammenwirken mit einer entsprechenden Vorrichtung auszuführen.

Die Vorteile und bevorzugten Ausgestaltungsmerkmale des zuvor beschriebenen Verfahrens sind auf die Vorrichtung anwendbar und übertragbar, und umgekehrt. Insbesondere ist es bevorzugt, dass das Verfahren mit der beschriebenen Vorrichtung durchgeführt wird. Die Vorrichtung ist zur Durchführung des Verfahrens bestimmt und eingerichtet. Im beschriebenen Verfahren wird das Kontaminationserfassungsgerät vorzugsweise mittels der beschriebenen Vorrichtung bewegt. Die Vorrichtung ist zum Bewegen des Kontaminationserfassungsgerätes im beschriebenen Verfahren bestimmt und eingerichtet.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
- Fig. 1: ein erstes Beispiel einer Vorrichtung zum Messen einer radiologischen Kontamination eines Werkstücks;
- Fig. 2: ein zweites Beispiel einer Vorrichtung zum Messen einer radiologischen Kontamination eines Werkstücks;
- Fig. 3: ein drittes Beispiel einer Vorrichtung zum Messen einer radiologischen Kontamination eines Werkstücks; und
- Fig. 4 und 5: ein Beispiel einer Bewegungsbahn in zwei Ansichten.

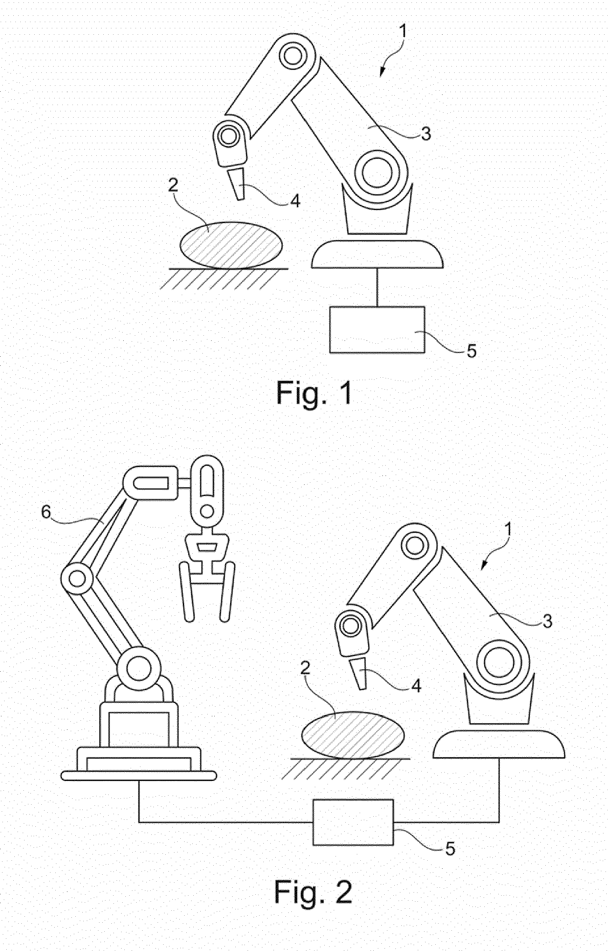

Die in den Fig. 1 bis 3 gezeigten Vorrichtungen fallen als solche nicht unter den Schutzumfang der Ansprüche. Allerdings kann das erfindungsgemäße Verfahren mit diesen Vorrichtungen durchgeführt werden.

Fig. 1 zeigt schematisch ein erstes Beispiel einer Vorrichtung 1 zum Messen einer radiologischen Kontamination eines Werkstücks 2, umfassend mindestens einen ersten Manipulator 3 mit einem Kontaminationserfassungsgerätes 4. Bei dem Werkstück 2 kann es sich um ein beliebiges Bauteil handeln, bei dem eine radiologische Kontamination vermutet wird. Bevorzugt handelt es sich bei dem Werkstück 2 um ein Werkstück, welches in einer kerntechnischen Anlage verbaut war und welches beim Rückbau der kerntechnischen Anlage aus dieser entfernt werden soll. Der erste Manipulator 3 ist bevorzugt so gestaltet, dass er zumindest über drei lineare und zwei rotatorische Freiheitsgrade verfügt, so dass das Kontaminationserfassungsgerät 4 auf einer Bewegungsbahn bewegbar ist. Unter der Bewegungsbahn wird eine Koordinatensatz verstanden, der den Weg des Kontaminationserfassungsgerätes 4 im Hinblick auf seine Ortskoordinaten und auf seine (vektorielle) Geschwindigkeit beschreibt. Bevorzugt umfasst die Bewegungsbahn auch die Ausrichtung des Kontaminationserfassungsgerätes 4 relativ zum Werkstück 2, so dass der Ausrichtungswinkel und der Abstand des Kontaminationserfassungsgeräts 4 relativ zum Werkstück oder zu einer Referenzebene vorgegeben ist, um eine Messung der Kontamination nach vorgebbaren Kriterien zu ermöglichen. Das Kontaminationserfassungsgerät 4 ist vorzugweise ein Proportionalzählrohr.

Der erste Manipulator 3 und das Kontaminationserfassungsgerät 4 sind mit einer Steuereinheit 5 verbunden, welches geeignet und bestimmt zur Durchführung des erfindungsgemäßen Verfahrens ist. Die Steuereinheit 5 steuert den ersten Manipulator 3 entsprechend der Bewegungsbahn so, dass das Kontaminationserfassungsgerät 4 der Bewegungsbahn folgend bewegt wird. Gleichzeitig erfasst es die Kontaminationsdaten, die das Kontaminationserfassungsgerät 4 bereitstellt und speichert diese ortsaufgelöst (also mit den zugehörigen Koordinaten auf dem Werkstück) ab.

Fig. 2 zeigt schematisch ein zweites Beispiel der Vorrichtung 1 zum Messen einer radiologischen Kontamination des Werkstücks 2. Hier werden nur die Unterschiede im Vergleich zum ersten Beispiel beschrieben, ansonsten wird auf die Beschreibung zum ersten Beispiel verwiesen. Das zweite Beispiel weist einen zweiten Manipulator 6 auf. Der zweite Manipulator 6 dient der Bewegung des Werkstücks 2, um so beispielsweise das Werkstück 2 drehen zu können. Dies erfolgt zu vorgebbaren Zeitpunkten, die beim Festlegen der Bewegungsbahn berücksichtigt werden. So können auch komplexe Geometrien des Werkstücks 2 auf einfache Art und Weise vermessen werden.

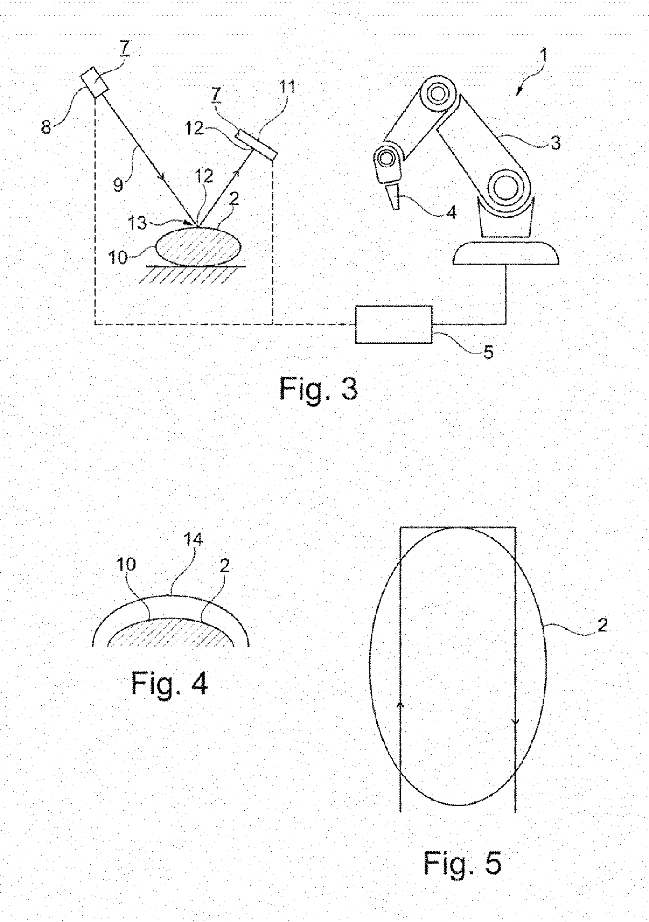

Fig. 3 zeigt schematisch ein drittes Beispiel der Vorrichtung 1 zum Messen einer radiologischen Kontamination des Werkstücks 2. Hier wird nur auf die Unterschiede im Vergleich zum ersten und zum zweiten Beispiel eingegangen, ansonsten wird auf die dort gemachten Ausführungen verwiesen. Neben dem ersten Manipulator 3 weist die Vorrichtung 1 zusätzlich ein Erfassungsgerät 7 zum Erstellen eines dreidimensionalen Oberflächendatensatzes auf, der als dreidimensionaler Laserscanner ausgebildet ist. Das Erfassungsgerät 7 umfasst einen Laser 8, der Strahlung 9 auf die Oberfläche 10 des Werkstücks 2 emittiert. Die Strahlung 9 wird von der Oberfläche 10 reflektiert und von einem Detektor 11 erfasst. Der Detektor 11 ist als CCD-Sensor ausgebildet und erlaubt über Triangulation die Bestimmung des Abstandes 12 beispielsweise zwischen Detektor 11 und dem Reflektionspunkt 13 auf der Oberfläche 10, an dem die Strahlung 9 reflektiert wird. Alternativ kann auch ein Abstand von einem Referenzpunk oder einer Referenzebene bestimmt werden. Statt eines einzelnen Laserstrahls kann auch ein Linienlaser und ein entsprechender CCD Sensor verwendet werden.

Durch eine Bewegung und/oder Verschwenkung des Lasers 8 kann so die gesamte Oberfläche 10 des Werkstücks 2 vermessen werden, so dass der dreidimensionale Oberflächendatensatz erhalten wird, der die Koordinaten der gesamten Oberfläche in einem vorgebbaren Koordinatensystem angibt. Bei der Erfassung kann das Werkstück 2 bewegt werden, beispielsweise gedreht, um die gesamte Oberfläche 10 des Werkstücks zu erfassen. Dies kann bevorzugt durch den - hier nicht gezeigten - zweiten Manipulator 6 erfolgen.

Laser 8 und Detektor 11, also das Erfassungsgerät 7, sind ebenfalls mit der Steuereinheit 5 verbunden und werden von dieser angesteuert, insbesondere in Bezug auf die Bewegung von Laser 8 und Detektor 11, so notwendig, und die erhaltenen Daten. Bevorzugt wird das Erfassungsgerät 7 durch einen nicht gezeigten Manipulator bewegt, wobei die Bewegung insbesondere automatisiert nach einer "Next best Viewpoint" Methode erfolgt. Der Oberflächendatensatz bildet somit die Geometrie des Werkstücks 2 bzw. die Geometrie der Oberfläche 10 des Werkstücks 2 ab.

Fig. 4 und 5 zeigen schematisch die Ortskoordinaten einer Bewegungsbahn 14 in zwei Ansichten, auf der das Kontaminationserfassungsgerät 4 bewegt wird, um Kontaminationsdaten der Oberfläche 10 des Werkstücks 2 zu erfassen. Diese wird festgelegt basierend auf dem dreidimensionalen Oberflächendatensatz der Oberfläche 10 des Werkstücks 2. Dabei kann der Oberflächendatensatz unmittelbar vor Schritt a) des erfindungsgemäßen Verfahrens erstellt werden oder es kann auf einen bereits bestehenden Oberflächendatensatz des Werkstücks 2 zurückgegriffen werden. Die Bewegungsbahn 14 umfasst dabei neben den gezeigten Ortsdaten auch Geschwindigkeitsdaten der Geschwindigkeit, mit der das Kontaminationserfassungsgerät 4 für bestimmte Zeiträume (also wenn notwendig diskontinuierlich) bewegt wird und Ausrichtungsdaten für das Kontaminationserfassungsgerät 4, um eine Erfassung der Kontamination der Oberfläche 10 ortsaufgelöst mit vorgebbaren Messgenauigkeiten in Schritt b) des erfindungsgemäßen Verfahrens zu ermöglichen.

Dies erlaubt eine vollautomatische ortsaufgelöste Erfassung der Kontamination auf der Oberfläche 10 des Werkstücks 2 als Vormessung zu einer Freimessung. Die Freimessung erfolgt dabei nach Kriterien, die von Land zu Land verschieden sein können und die insbesondere amtlich festgelegt sind, beispielsweise durch entsprechende Gesetze und Verordnungen, wie beispielsweise in der Bundesrepublik Deutschland in der Verordnung zum Schutz vor der schädlichen Wirkung ionisierender Strahlung festgelegt. Die erhaltene Kontamination ist ortsaufgelöst und kann auch beinhalten, dass zumindest in Teilbereichen keine Kontamination, also eine Kontamination unterhalb der Nachweisgrenze, oder auch nur eine geringe Kontamination vorliegt. Durch das hier beschriebene Verfahren und die entsprechende Vorrichtung 1 lassen sich so die Vormessungen erheblich vereinfachen und beschleunigen, zudem steigt die entsprechende Zuverlässigkeit der Messung, da Fehler durch Bedienpersonal nahezu ausgeschlossen werden können. Das erfindungsgemäße Verfahren wird zur Vormessung vor Freimessung von radiologisch kontaminierten Werkstücken 2 eingesetzt.

### Bezugszeichenliste

- 1: Vorrichtung zum Messen einer radiologischen Kontamination
- 2: Werkstück
- 3: erster Manipulator
- 4: Kontaminationserfassungsgerät
- 5: Steuereinheit
- 6: zweiter Manipulator
- 7: Erfassungsgerät
- 8: Laser
- 9: Strahlung
- 10: Oberfläche
- 11: Detektor
- 12: Abstand
- 13: Reflektionspunkt
- 14: Bewegungsbahn

## Patentansprüche

1. Verfahren zum Messen einer radiologischen Kontamination einer Oberfläche (10) eines Werkstücks (2), umfassend:
a) Festlegen einer Bewegungsbahn (14) umfassend dreidimensionale Ortskoordinaten und eine dreidimensionale Geschwindigkeitskoordinate basierend zumindest auf einem Erfassungsbereich und einer Erfassungsgenauigkeit eines Kontaminationserfassungsgerätes (4) und einem dreidimensionalen Oberflächendatensatz des Werkstücks (2); und
b) automatisierte Bewegung des Kontaminationserfassungsgerätes (4) entsprechend der Bewegungsbahn (14) bei gleichzeitiger ortsaufgelöster Erfassung der Kontaminationsdaten der Oberfläche (10), **dadurch gekennzeichnet, dass** das Verfahren zur Vormessung vor einer Freimessung des Werkstücks (2) durchgeführt wird.

2. Verfahren nach Anspruch 1, bei dem vor Schritt a) die Oberfläche (10) des Werkstücks (2) zur Erstellung eines dreidimensionalen Oberflächendatensatzes dreidimensional erfasst wird.

3. Verfahren nach Anspruch 2, bei dem die dreidimensionale Erfassung der Oberfläche durch einen Laserscanner erfolgt.

4. Verfahren nach einem der Ansprüche 2 bis 3, bei dem das Werkstück (2) während der dreidimensionalen Erfassung zumindest zeitweise bewegt wird.

5. Verfahren nach einem der vorhergehenden Ansprüche, bei dem das Werkstück (2) während Schritt b) zumindest zeitweise bewegt wird.

6. Verfahren nach einem der vorhergehenden Ansprüche, bei dem die Kontaminationsdaten durch ein Kontaminationserfassungsgerät (4) basierend auf mindestens einem der folgenden Messwertnehmer erfasst werden:
- einem Szintillator; und
- einem Zählrohr.

## Claims

1. Method for measuring a radiological contamination of a surface (10) of a workpiece (2), comprising:
a) defining a trajectory (14) comprising three-dimensional spatial coordinates and a three-dimensional speed coordinate on the basis of at least a detection region and a detection accuracy of a contamination detection device (4) and a three-dimensional surface data record of the workpiece (2); and
b) automatically moving the contamination detection device (4) in accordance with the trajectory (14) while simultaneously acquiring the contamination data of the surface (10) with spatial resolution,
**characterized in that**
the method is performed as the pre-measurement prior to a clearance measurement of the workpiece (2).

2. Method according to Claim 1, wherein the surface (10) of the workpiece (2) is detected three-dimensionally prior to step a), for the purpose of creating a three-dimensional surface data record.

3. Method according to Claim 2, wherein the three-dimensional detection of the surface is performed using a laser scanner.

4. Method according to either of Claims 2 and 3, wherein the workpiece (2) is moved at least intermittently during the three-dimensional detection.

5. Method according to any of the preceding claims, wherein the workpiece (2) is moved at least intermittently during step b).

6. Method according to any of the preceding claims, wherein the contamination data are acquired by a contamination detection device (4) based on at least one of the following measurement value recorders:
- a scintillator; and
- a counting tube.

## Revendications

1. Procédé de mesure d'une contamination radiologique d'une surface (10) d'une pièce (2), ledit procédé comprenant les étapes suivantes :
a) déterminer une trajectoire de mouvement (14) comprenant des coordonnées de localisation tridimensionnelles et une coordonnée de vitesse tridimensionnelle sur la base au moins d'une plage de détection et d'une précision de détection d'un dispositif de détection de contamination (4) et d'un ensemble de données de surface tridimensionnelle de la pièce (2) ; et
b) déplacer de manière automatisée le dispositif de détection de contamination (4) suivant la trajectoire de déplacement (14) et acquérir simultanément les données de contamination de la surface (10) avec résolution spatiale,
**caractérisé en ce que**
le procédé de mesure préliminaire est effectué avant une mesure de contamination de la pièce (2).

2. Procédé selon la revendication 1, dans lequel avant l'étape a) la surface (10) de la pièce (2) est détectée en trois dimensions afin de créer un ensemble de données de surface tridimensionnelle.

3. Procédé selon la revendication 2, dans lequel la détection tridimensionnelle de la surface est réalisée par un scanner laser.

4. Procédé selon l'une des revendications 2 à 3, dans lequel la pièce (2) est déplacée au moins temporairement pendant la détection tridimensionnelle.

5. Procédé selon l'une des revendications précédentes, dans lequel la pièce (2) est déplacée au moins temporairement pendant l'étape b).

6. Procédé selon l'une des revendications précédentes, dans lequel les données de contamination sont acquises par un dispositif de détection de contamination (4) basé sur au moins un des capteurs de mesure suivants :
- un scintillateur ; et
- un tube de comptage.
